# EUROPEAN PATENT APPLICATION

(11) **EP 1 915 908 A1**
(43) Date of publication of application: **30.04.2008**
(21) Application number: 06022485.4
(22) Date of filing: 27.10.2006
(51) Int. Cl.: A01N 43/84

(54) **A herbicidal combination**

(71) Applicant: Syngenta Participations AG, 4058 Basel (CH)
(72) Inventor: The designation of the inventor has not yet been filed
(74) Representative: Andrews, Christopher John

(57) **Abstract**

A method of controlling undesired vegetation in crops of useful plants which comprises applying a combination comprising (A) flumioxazin and (B) one or more of prosulfocarb, pinoxaden, pendimethalin, diflufenican, flupyrsulfuron, mesosulfuron, triasulfuron, flufenacet and pyroxsulam, either simultaneously or in succession in any order, to the locus where control is desired, for example, on the undesired vegetation or the locus thereof.

## Description

The present invention relates to a method of controlling undesired vegetation in crops of useful plants, for example, monocotyledon crop plants, such as cereal crops, rice, corn, potatoes and sugar cane, by using a synergistic combination of compounds containing flumioxazin.

In crop protection products, it is desirable to increase the specific activity of an active ingredient and the reliability of action.

Surprisingly, it has now been found that a combination of variable amounts of at least two compounds (sometimes referred to as active ingredients) exhibits a synergistic action that is capable of controlling, either or both pre-emergence and post-emergence, the majority of undesired vegetation occurring especially in crops of useful plants without causing any appreciable damage to the useful plant.

The benefit of the invention, therefore, can be attained by allowing a combination of compounds to act on the undesired vegetation, or by allowing the individual compounds to act on the undesired vegetation, either by applying them simultaneously or in succession.

It has been found that certain combinations of flumioxazin are particularly effective in controlling undesired vegetation.

Accordingly, in a first aspect, the present invention provides a method of controlling undesired vegetation in crops of useful plants which comprises applying a combination comprising (A) flumioxazin and (B) one or more of prosulfocarb, pinoxaden, pendimethalin, diflufenican, flupyrsulfuron, mesosulfuron, triasulfuron, flufenacet and pyroxsulam, either simultaneously or in succession in any order, to the locus where control is desired, for example, on the undesired vegetation or the locus thereof.

In a second aspect, the present invention provides a combination as defined the first aspect.

In a third aspect, the invention provides a composition comprising (A) flumioxazin and (B) one or more of prosulfocarb, pinoxaden, pendimethalin, diflufenican, flupyrsulfuron, mesosulfuron, triasulfuron, flufenacet and pyroxsulam, and optionally one or more customary formulation auxiliaries.

In an embodiment, the combination comprises (i) flumioxazin and prosulfocarb; (ii) flumioxazin, prosulfocarb and pendimethalin; (iii) flumioxazin and diflufenican; (iv) flumioxazin and pendimethalin, (v) flumioxazin, prosulfocarb and diflufenican; (vi) flumioxazin and flupyrsulfuron; (vii) flumioxazin and mesosulfuron; (viii) flumioxazin and triasulfuron; (ix) flumioxazin and flufenacet; (x) flumioxazin and pyroxsulam; or (xi) flumioxazin and pinoxaden, wherein any one of (i) to (x) optionally further comprises pinoxaden.

In a further embodiment, each combination comprises one or more further pesticides, such as herbicides.

In an embodiment of each aspect of the present invention, one or more compounds of formulae S-I to S-X below are used in each combination with the active ingredients of the present invention. Compounds of formulae S-I to S-X are suitable for the protection of useful plants against the phytotoxic action of a certain herbicides (e.g., pinoxaden, triasulfuron).

A compound of formula S-I: 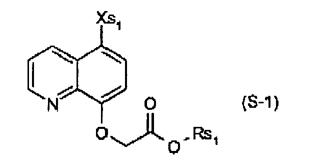 wherein
Xs₁ is hydrogen or halogen and
Rs₁ is hydrogen, C₃-C₈alkenyl, C₃-C₈alkynyl, C₃-C₈cycloalkyl, C₁-C₈alkyl, or C₁-C₈alkoxy- or C₃-C₈alkenyloxy-substituted C₁-C₈alkyl, or
Rs₁ is a cation selected from the group of the alkali and alkaline earth metals, iron, copper, aluminium, ammonium, quaternary ammonium, sulfonium and phosphonium, such cations being described e.g. in WO 02/034048;
a compound of formula S-II: 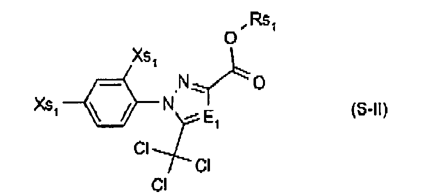 wherein E₁ is nitrogen or methine, the substituents Xs₁ are each independently of the other hydrogen or halogen, and Rs₁ is hydrogen, C₃-C₈alkenyl, C₃-C₈alkynyl, C₃-C₈cycloalkyl, C₁-C₆alkyl, or C₁-C₈alkoxy- or C₃-C₈alkenyloxy-substituted C₁-C₈alkyl, or Rs₁ is a cation selected from the group of the alkali and alkaline earth metals, iron, copper, aluminium, ammonium, quaternary ammonium, sulfonium and phosphonium:
a compound of formula S-III: 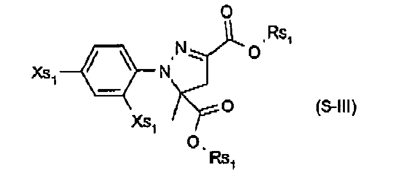 wherein the substituents Xs₁ are each independently of the other hydrogen or halogen, and the substituents Rs₁ are each independently of the other hydrogen, C₃-C₈alkenyl, C₃-C₈-alkynyl, C₃-C₈cycloalkyl, C₁-C₈alkyl, or C₁-C₈alkoxy- or C₃-C₈alkenyloxy-substituted C₁-C₈-alkyl, or the substituents Rs₁ are a cation selected from the group of the alkali and alkaline earth metals, iron, copper, aluminium, ammonium, quaternary ammonium, sulfonium and phosphonium;
a compound of formula S-IV: 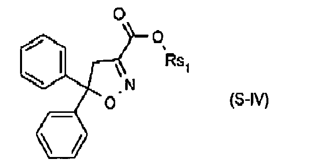 wherein Rs₁ is hydrogen, C₃-C₈alkenyl, C₃-C₈alkynyl, C₃-C₈cycloalkyl, C₁-C₈alkyl, or C₁-C₈alkoxy- or C₃-C₈alkenyloxy-substituted C₁-C₈alkyl, or Rs₁ is a cation selected from the group of the alkali and alkaline earth metals, iron, copper, aluminium, ammonium, quaternary ammonium, sulfonium and phosphonium;
a compound of formula S-V: 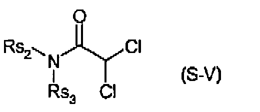 wherein Rs₂ and Rs₃ are each independently of the other C₁-C₈alkyl, C₂-C₈akenyl or C₃-C₈-cycloalkyl, or Rs₂ and Rs₃ together form a radical of formula 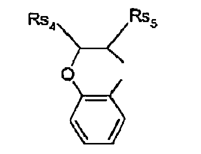 wherein Rs₄ and Rs₅ are each independently of the other hydrogen or C₁-C₈alkyl, or Rs₂ and Rs₃ together form a radical of formula 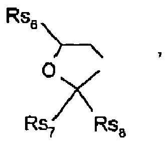 wherein Rs₇ and Rs₈ are each independently of the other C₁-C₆alkyl, or Rs₇ and Rs₈ together form -(CH₂)₅-, and Rs₆ is hydrogen, C₁-C₆alkyl, aryl or heteroaryl;
a compound of formula S-VI: 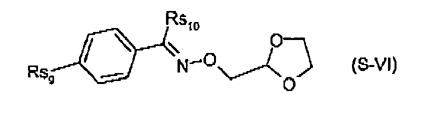 wherein Rs₈ is hydrogen or halogen and Rs₁₀ is cyano or trifluoromethyl;
a compound of formula S-VII: 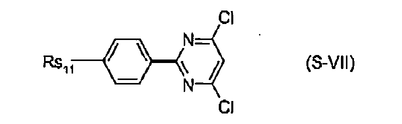 wherein Rs₁₁ is hydrogen or methyl;
a compound of formula S-VIII: 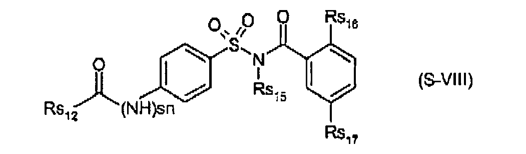 wherein sn is 0 or 1,
Rs₁₂ is hydrogen, C₁-C₈alkyl, C₃-C₈cycloalkyl, C₃-C₈alkenyl, C₃-C₈alkynyl or -N(-Rs₁₃ -Rs₁₄), wherein Rs₁₃ and Rs₁₄ are each independently of the other hydrogen, C₁-C₈alkyl,
C₃-C₈cycloalkyl, C₃-C₈alkenyl or C₃-C₈alkynyl, or Rs₁₃ and Rs₁₄ together form a C₄-C₆alkylene group which may be interrupted by oxygen, sulfur, SO, SO₂, NH or by N(C₁-C₄alkyl);
Rs₁₅ is hydrogen or a cation selected from the group of the alkali and alkaline earth metals, iron, copper, aluminium, ammonium, quaternary ammonium, sulfonium and phosphonium,
Rs₁₆ is hydrogen, halogen, C₁-C₈alkyl or methoxy and
R_{S17} is hydrogen, halogen, C₁-C₈alkyl, trifluoromethyl or C₁-C₈alkoxy;
a compound of formula S-IX: 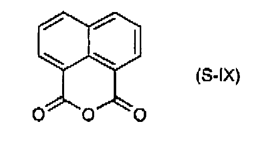 a compound of formula S-X: 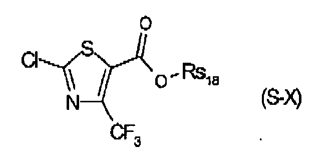 wherein Rs₁₆ is benzyl, hydrogen, C₃-C₈alkenyl, C₃-C₈alkynyl, C₃-C₈cycloalkyl, C₁-C₈alkyl, or C₁-C₆alkoxy- or C₃-C₈alkenyloxy-substituted C₁-C₆alkyl, or Rs₁₈ is a cation selected from the group of the alkali and alkaline earth metals, iron, copper, aluminium, ammonium, quaternary ammonium, sulfonium and phosphonium.

The safeners of formulae S-I to S-X are known and are described e.g. in US-A-5,041,157, US-A-5,541,148, US-A-5,006,656. EP-A-0 094 349, EP-A-0 551 650, EP-A-0 268 554, EP-A-0 375 061, EP-A-0 174 562, EP-A-492 366, WO 91/7874, WO 94/987, DE-A-196 12 943, WO 96/29870, WO 98113361, WO 98/39297, WO 98/27049, EP-A-0 716 073, EP-A-0 613 618, US-A-5,597,776, EP-A-0 430 004, WO 97/45016, WO 99/16744 and WO 03/02205.

Preferred safeners correspond to formula S-I.1 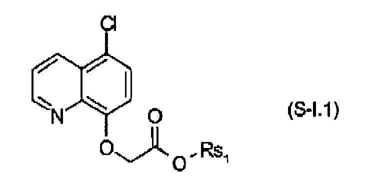 wherein Rs₁ is hydrogen, C₃-C₈cycloalkyl, C₁-C₈alkyl, or C₁-C₈alkoxy- or C₃-C₈alkenyloxy-substituted C₁-C₈alkyl, or Rs₁ is a cation selected from the group of the alkali and alkaline earth metals, iron, copper, aluminium, ammonium, quaternary ammonium, sulfonium and phosphonium,

### formula S-II.1

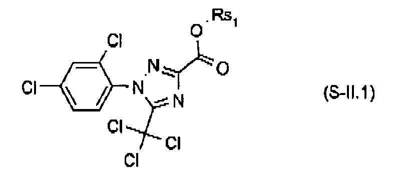

wherein Rs₁ is C₁-C₈alky, or C₃-C₈alkenyloxy-substituted C₁-C₈alkyl,

### formula S-III.1

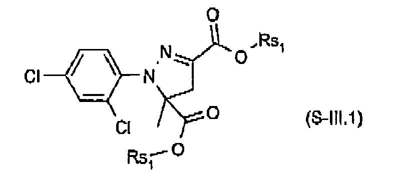

wherein the substituents Rs₁ are each independently of the other C₁-C₈alkyl, or C₃-C₈alkenyloxy-substituted C₁-C₈alkyl,

### formula S-IV.1

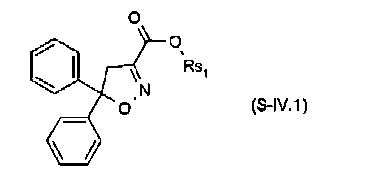

wherein Rs₁ is C₁-C₈alkyl, or C₃-C₈alkenyloxy-substituted C₁-C₈alkyl,

### formula S-V.1

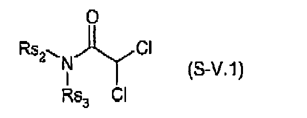

wherein Rs₂ and Rs₃ are each independently of the other C₂-C₆alkenyl, or Rs₂ and Rs₃ together form a radical of formula 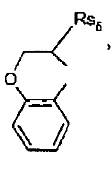 wherein Rs₅ is hydrogen or C₁-C₄alkyl, or Rs₂ and Rs₃ together form a radical of formula 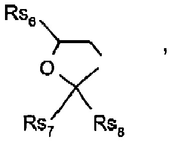 wherein Rs₇ and Rs₈ are each independently of the other C₁-C₄alkyl, or Rs₇ and Rs₈ together form -(CH₂)₅-, and Rs₆ is hydrogen, C₁-C₄alkyl or

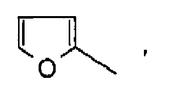

### formula S-VI.1

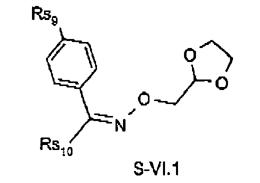

wherein Rs₉ is hydrogen or chlorine and Rs₁₀ is cyano or trifluoromethyl,

### formula S-VII.1

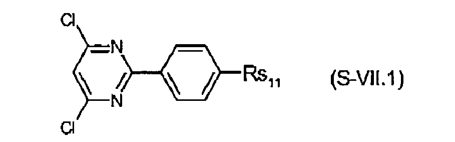

wherein Rs₁₁ is hydrogen or methyl,

### formula S-VIII.1

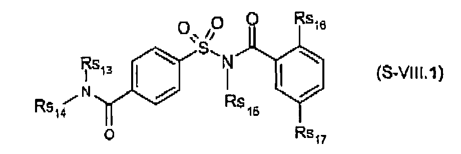

wherein Rs₁₃ and Rs₁₄ are each independently of the other hydrogen, C₁-C₄alkyl, C₃-C₆cycloalkyl, C₃-C₆alkenyl or C₃-C₆alkynyl, or Rs₁₃ and Rs₁₄ together form a C₄-C₆-alkylene group, Rs₁₅ is hydrogen or a cation selected from the group of the alkali and alkaline earth metals, iron, copper, aluminium, ammonium, quaternary ammonium, sulfonium and phosphonium, Rs₁₆ is hydrogen, C₁-C₈alkyl or methoxy and Rs₁₇ is hydrogen, C₁-C₆alkyl or C₁-C₆alkoxy,

### formula S-IX.1

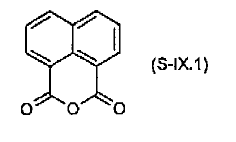

### and formula S-X.1

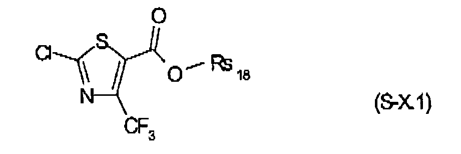

wherein Rs₁₆ is benzyl, C₁-C₈alkyl, or C₃-C₈alkenyloxy-substituted C₁-C₈alkyl.

Especially preferred safeners of formula S-I.I are cloquintocet-mexyl (CAS RN 99607-70-2) or sulfonium and phosphonium salts thereof, such as are known from WO 02/34048, of formula S-II.1 fenchlorazole-ethyl (CAS RN 103112-35-2, and CAS RN 103112-36-3 for the corresponding acid), of formula S-III.1 mefenpyr-dlethyl (CAS RN 135590-91-9, and CAS RN 135591-00-3 for the corresponding di-acid), of formula S-IV.1 isoxadifen-ethyl (CAS RN 163520-33-0, and CAS RN 209866-92-2 for the corresponding acid), of formula S-V.1 furilazole (CAS RN 121776-33-8, and CAS RN 121776-57-6 for the corresponding R isomer), benoxacor (CAS RN 98730-04-2) and dichlormid (CAS RN 37764-25-3), of formula S-VI.1 oxabetrinil (CAS RN 74782-23-3) and cyometrinil (CAS RN 78370-21-5, and CAS RN 63278-33-1 for the corresponding (Z) isomer), of formula S-VII.1 fenclorim (CAS RN 3740-92-9), of formula S-VIII.1 N-cydopropyl-4-(2-methoxy-benzoylsulfamoyl)-benzamide (CAS RN 221667-31-8) and N-isopropyl-4-(2-methoxy-benzoylsulfamoyl)-benzamide (CAS RN 221668-34-4), of formula S-IX-1 naphthalic anhydride (CAS RN 81-84-5) and of formula S-X.1 flurazole (CAS RN 72850-64-7).

A preferred combination comprises (α) flumioxazin and prosulfocarb, optionally further comprising pinoxaden and/ or one or more safeners; (β) flumioxazin, pinoxaden, optionally one or more safeners; and (χ) flumioxazin and triasulfuron, optionally comprising pinoxaden and/ or one or more safeners.

In an embodiment of each aspect, the following combinations are excluded from the scope of the invention, especially, in the form of a tank-mixture or method of application in succession of the active ingredients in the mixture: flumioxazin, diflufenican and flufenacet; flumioxazin and pendimethalin; flumioxazin, pendimethalin and picolinafen; or flumioxazin, pendimethalin and flufenacet, are

It is surprising that combinations of the specific compounds defined in the first aspect exceed that expected from additive action of the individual compounds used alone on the undesired vegetation and thus broaden the range of action of the compounds especially in two respects: firstly, the rates of application of the individual compounds are reduced while a good level of action is maintained and, secondly, the combinations according to the invention achieves a high level of undesired vegetation control also in those cases where the individual compounds, in the range of low rates of application, have become useless from the agronomic standpoint. Further, the result may be a considerable broadening of the spectrum of undesired vegetation controlled by the compounds. The combination according to the invention, while retaining excellent control of undesired vegetation in useful plants, also allows greater flexibility in succeeding crops.

The term "crops of useful plants" is to be understood as plants that have a value (*e*.*g*., monetary value) to a grower and includes those, which have been made tolerant to compounds or classes of compounds as a result of conventional methods of breeding or genetic engineering. The term "plant" as used herein includes seedlings, bushes and trees. Undesired vegetation are those plants that affect the growth and quality of the useful plants and examples include grasses and broad-leaved weeds. A herbicidally effective amount of the combinations of the active ingredients are applied on appropriate areas for controlling the undesired vegetation to allow them to act on the undesired vegetation or the area of cultivation of the crop plants. Areas of cultivation are areas of land on which the crop plants are already growing or in which the seed material of those crop plants has been sown, and also land on which it is intended to grow those crop plants.

The control of the undesired vegetation ensures satisfactory crop yield and quality, and the grower of the crop has often to balance the costs associated with the use of compounds with the resulting yield, but generally an increase of, for example, at least 5% yield of a crop which has undergone compound treatment compared with an untreated crop is considered control by the compound.

The combination according to the invention can be used against a large number of agronomically important undesired vegetation, such as grass weeds, *e.g.*, Alopecurus species, Poa- species, Apera- species, Avena spp., Lolium -species, Bromus-species, Echinochloa spp., Leptochloa spp., Digitaria spp., Phalaris spp., Setaria spp., Brachiaria spp., and Ischeamum spp.; broad-leaved weeds, such as Gallium spp., Lamium spp., Geranium spp. (*e.g.*, Geranium rotundifolium), Solanum spp., Veronica spp., Viola spp-(*e.g.*, Viola tricolor), Alchemilla spp., Kochia spp., Stellaria spp., Polygonum spp., Matricaria spp., Chenocpodium spp., Aethusa cynapum, Amaranthus spp., Galinsoga spp., Monochoria spp., Lindernia spp., Anthemis spp., Sinapis spp., Raphanus spp., Papaver spp., Capsella spp., Rotala spp., Butomus spp., Limnocharis spp., Sphenoclea spp., Commelina spp., Ludwigia spp., Bidens pilosa, Elatine spp., and Kickxia spp.; and the combination also controls annual and perennial sedges, *e.g*., Scirpus spp. (*e*.*g*., Scirpus juncoides), Sagittaria spp., Cyperus spp., Eleocharis spp. and Fimbristylis spp..

In particular, the each of the combinations according to the first aspect can be used against ALS-resistant weeds and/or ACCase-resistant weeds in crops of useful plants, for example in crops of rice, cereals and maize. Examples of ALS resistant weeds, for example in rice, are Echinocloa gruss galli, Elatine triandria, Lindernia spp., Scirpus juncoides, Monochoria vaginalis, Monochoria korsakowaii; and in cereals, are Alopecurus myr., Chenopodium album, Amaranthus spp., Raphanus raphanistrum, Sinapis spp., Kochia spp.. Examples of Accase resistant weeds, for example in rice, are Echinochloa crus-galli and Brachiaria spp.; and in cereals, are Alopecurus myr., Lolium spp., Avena spp., Apera spp..

The combination according to the invention is suitable for all methods of application conventionally used in agriculture, *e.g.*, pre-emergence application, and post-emergence application. The combination according to the invention is suitable especially for controlling undesired vegetation in crops of useful plants, such as monocotyledon crops, for example:
- cereal crops - where examples of undesired vegetation include Alopecurus species, Poaspecies, Apera- species, Avena spp-, Lolium -species, Bromus-species, Fumaria spp., Myosotis spp., Thiaspi spp., Phalaris spp., Gallium spp., Geranium spp. (*e.g.*, Geranium rotundifolium), Veronica spp., Viola spp. (*e.g.*, Viola tricolor), Lamium spp., Stellaria spp., Polygonum spp., Aethusa cynapum, Alchemilla spp., Kochia spp., Matricaria spp., Anthemis spp., Papaver spp., Myosotis spp., Thlaspi spp., Capsella spp., Chenocpodium spp. and Kickxia spp.;
- rice crops - where examples of undesired vegetation include Echinochloa spp., Leptochloa spp. Digitaria spp. Setaria spp. Brachiaria spp., and Ischeamum spp., Monochoria spp., Lindernia spp., Ludwigia spp., Elatine spp., Scirpus spp. (*e.g.*, Scirpus juncoides), Cyperus spp., Eleocharis spp. Butomus spp., Rotala spp., Commelina spp., Limnocharis spp., Sphenoclea spp., Sagittaria spp., Bidens pilosa, and Fimbristylis spp.;
- corn - where examples of undesired vegetation include Echinochloa spp., Digitaria spp., Setaria spp., Cyperus spp., Kochia spp., Matricaria spp., Chenocpodium ppp., Solanum spp., Polygonum spp., Amaranthus spp., and Galinsoga spp.; and
- sugar cane - where examples of undesired vegetation include Echinochloa spp., Digitaria spp., Setaria spp., Brachiaria spp., Kochia spp. and Amarathus spp..

The combination is especially preferred for controlling undesired vegetation in cereal or graminaceous crops.

The amount of compounds (A) and (B) used in the combination according to the present invention is such that a herbicidal and synergistic activity is demonstrated and is generally in any effective mixing ratio, but usually an excess of compound (A) is present over compound (B). In an embodiment, the weight ratio of compound (A) to compound (B) is in the range of from 1:1000 to 1:10, preferably 1:700 to 1:20, especially 1:450 to 1:50.

The combination according to the invention is suitable for all methods of application conventionally used in agriculture, e.g., pre-emergence application, and post-emergence application.

The rate of application may vary within wide limits and depends on the nature of the soil, the method of application (pre- or post-emergence, etc.), the crop plant, the undesired vegetation to be controlled, the prevailing climatic conditions, and other factors governed by the method of application, the time of application and the target crop. The active ingredient mixture according to the invention can generally be applied at a rate of from 0.01 to 10, preferably 0.1 to 7, especially 1 to 5, kg per ha. In the event the compounds are applied separately, the total amount applied is the same with the individual compounds applied on the basis of the mixing mentioned above.

In the instance the combination is flumioxazin and prosulfocarb, the application rate can, independent of each other, be 1 to 1000, preferably 2 to 500, more preferably 5 to 200, g per ha of flumioxazin, and 10 to 10000, preferably 100 to 8000, more preferably 500 to 5000. g per ha of prosulfocarb.

In the instance the combination is flumioxazin and pinoxaden, the application rate can, independent of each other, be 1 to 1000, preferably 2 to 500, more preferably 5 to 200, g per ha of flumioxazin, and 1 to 500, preferably 10 to 300, more preferably 50 to 100, g per ha of pinoxaden.

In the instance the combination is flumioxazin and triasulfuron, the application rate can, independent of each other, be 1 to 1000, preferably 2 to 500, more preferably 5 to 200, g per ha of flumioxazin, and 1 to 500, preferably 2 to 300, more preferably 5 to 100, g per ha of triasulfuron.

Whether the combination according to the invention is used as a composition comprising compounds (A) and (B) or used as individual compounds either simultaneously or in succession, the compounds may be employed in unmodified form, *i.e.,* as obtained in synthesis, but are generally used in a formulation, formulated together with the adjuvants conventionally used in formulation technology (also known as formulation auxiliaries), such as solvents, solid carriers or surfactants, for example, into emulsifiable concentrates, directly sprayable or dilutable solutions, wettable powders, soluble powders, dusts, granules or microcapsules, as described in WO 97/34483, pages 9 to 13. As with the nature of the formulation, the methods of application, such as spraying, atomising, dusting, wetting, scattering or pouring, are chosen in accordance with the intended objectives and the prevailing circumstances. The formulations can be prepared in a known manner, e.g., by intimately mixing and/or grinding the active ingredients with the formulation adjuvants, e.g., solvents or solid carriers. In addition, surface-active compounds (surfactants) may also be used in the preparation of the formulations.

Examples of solvents and solid carriers are given, for example, in WO 97/34485, page 6. Depending on the nature of the active ingredients to be formulated, suitable surface-active compounds are non-ionic, cationic and/or anionic surfactants and surfactant mixtures having good emulsifying, dispersing and wetting properties. Examples of suitable anionic, non-ionic and cationic surfactants are listed, for example, in WO 97/34485, pages 7 and 8. Also suitable for the preparation of the herbicidal compositions according to the invention are the surfactants conventionally employed in formulation technology, which are described, *inter alia,* in "McCutcheon's Detergents and Emulsifiers Annual" MC Publishing Corp., Ridgewood New Jersey, 1981, Stache, H., "Tensid-Taschenbuch", Carl Hanser Verlag, Munich/Vienna. 1981 and M. and J. Ash, "Encyclopedia of Surfactants". Vol I-III, Chemical Publishing Co., New York, 1980-81.

The herbicidal formulations usually contain from 0.1 to 99 % by weight, especially from 0.1 to 95 % by weight, of active ingredient, from 0 to 25 % by weight, especially from 0.1 to 25 % by weight, of a surfactant, and the balance a solid or liquid formulation adjuvant.

Whereas commercial products are usually formulated as concentrates (also known as pre-mix), the end user will normally employ dilute formulations. The compositions may also comprise further ingredients, such as stabilisers, e.g., vegetable oils or epoxidised vegetable oils (epoxidised coconut oil, rapeseed oil or soybean oil), antifoams, e.g., silicone oil, preservatives, viscosity regulators, binders, tackifiers and also fertilisers or other active ingredients.

Preferred formulations have especially the following compositions:
(% = percent by weight)

**Emulsifiable concentrates:**

| | |
|---|---|
| active ingredient mixture: | 1 to 90 %, preferably 5 to 20 % |
| surfactant: | 1 to 30 %, preferably 10 to 20 % |
| liquid carrier: | balance |

**Dusts:**

| | |
|---|---|
| active ingredient mixture: | 0.1 to 10 %, preferably 0.1 to 5 % |
| solid carrier. | 99.9 to 90 %, preferably 99.9 to 95 % |

**Suspension concentrates:**

| | |
|---|---|
| active ingredient mixture: | 5 to 75 %, preferably 10 to 50 % |
| water: | 94 to 24 %, preferably 88 to 30 % |
| surfactant: | balance |

**Wettable powders:**

| | |
|---|---|
| active ingredient mixture: | 0.5 to 90 %, preferably 1 to 80 % |
| surfactant: | 0.5 to 20 %, preferably 1 to 15 % |
| solid carrier: | balance |

**Granules:**

| | |
|---|---|
| active ingredient mixture: | 0.1 to 30 %, preferably 0.5 to 15 % |
| solid carrier: | 99.9 to 70 %, preferably 99.5 to 85 % |

### Examples are specific formulations include:

| F1. Emulsifiable concentrates | a) | b) | c) | d) |
|---|---|---|---|---|
| active ingredient mixture | 5 % | 10 % | 25 % | 50 % |
| calcium dodecylbenzenesulfonate | 6 % | 8 % | 6 % | 8 % |
| castor oil polyglycol ether (36 mol of ethylene oxide) | 4 % | - | 4 % | 4 % |
| octylphenol polyglycol ether (7-8 mol of ethylene oxide) | - | 4 % | - | 2 % |
| cyclohexanone | - | - | 10 % | 20 % |
| arom. hydrocarbon mixture C₉-C₁₂ | 85% | 78% | 55% | 16 % |

Emulsions of any desired concentration can be obtained from such concentrates by dilution with water.

| F2. Solutions | a) | b) | c) | d) |
|---|---|---|---|---|
| active ingredient mixture | 5 % | 10 % | 50 % | 90 % |
| 1-methoxy-3-(3-methoxy-propoxy)-propane | - | 20 % | 20 % | - |
| polyethylene glycol MW 400 | 20 % | 10 % | - | - |
| N-methyl-2-pyrrolidone | - | - | 30 % | 10 % |
| arom. hydrocarbon mixture C₉-C₁₂ | 75 % | 60 % | - | - |

The solutions are suitable for use in the form of microdrops-

| F3. Wettable powders | a} | b) | c) | d) |
|---|---|---|---|---|
| active ingredient mixture | 5 % | 25 % | 50 % | 80 % |
| sodium lignosulfonate | 4 % | - | 3 % | - |
| sodium lauryl sulfate | 2 % | 3 % | - | 4 % |
| sodium diisobutylnaphthalene-sulfonate | - | 6 % | 5 % | 6 % |
| octylphenol polyglycol ether (7-8 mol of ethylene oxide) | - | 1 % | 2 % | - |
| highly dispersed silicic acid | 1 % | 3 % | 5 % | 10 % |
| kaolin | 88 % | 62 % | 35 % | - |

The active ingredient is mixed thoroughly with the adjuvants and the mixture is thoroughly ground in a suitable mill, affording wettable powders which can be diluted with water to give suspensions of any desired concentration.

| F4. Coated granules | a) | b) | c) |
|---|---|---|---|
| active ingredient mixture | 0.1 % | 5 % | 15 % |
| highly dispersed silicic acid | 0.9 % | 2 % | 2 % |
| inorganic carrier (diameter 0.1 - 1 mm) e.g., CaCO₃ or SiO₂ | 99.0 % | 93 % | 83% |

The active ingredient is dissolved in methylene chloride and applied to the carrier by spraying, and the solvent is then evaporated off *in vacuo.*

| F5. Coated granules | a) | b) | c) |
|---|---|---|---|
| active ingredient mixture | 0.1 % | 5 % | 15 % |
| polyethylene glycol MW 200 | 1.0 % | 2 % | 3 % |
| highly dispersed silicic acid | 0.9 % | 1 % | 2 % |
| inorganic carrier (diameter 0.1- 1 mm) *e.g.*, CaCO₃ or SiO₂ | 98.0 % | 92 % | 80 % |

The finely ground active ingredient is uniformly applied, in a mixer, to the carrier moistened with polyethylene glycol. Non-dusty coated granules are obtained in this manner.

| F6. Extruder granules | a) | b) | c) | d) |
|---|---|---|---|---|
| active ingredient mixture | 0.1 % | 3 % | 5 % | 15 % |
| sodium lignosulfonate | 1.5 % | 2 % | 3 % | 4 % |
| carboxymethylcellulose | 1.4 % | 2 % | 2 % | 2 % |
| kaolin | 97.0 % | 93 % | 90 % | 79 % |

The active ingredient is mixed and ground with the adjuvants, and the mixture is moistened with water. The mixture is extruded and then dried in a stream of air.

| F7. Dusts | a) | b) | c) |
|---|---|---|---|
| active ingredient mixture | 0.1 % | 1 % | 5 % |
| talcum | 39.9 % | 49 % | 35 % |
| kaolin | 60.0% | 50 % | 60 % |

Ready-to-use dusts are obtained by mixing the active ingredient with the carriers and grinding the mixture in a suitable mill.

| F8. Suspension concentrates | a) | b) | c) | d) |
|---|---|---|---|---|
| active ingredient mixture | 3% | 10 % | 25% | 50 % |
| ethylene glycol | 5% | 5% | 5% | 5% |
| nonylphenol polyglycol ether | - | 1 % | 2% | - |
| (15 mol of ethylene oxide) | | | | |
| sodium lignosulfonate | 3% | 3% | 4 % | 5 % |
| carboxymethylcellulose | 1 % | 1 % | 1 % | 1 % |
| 37 % aqueous formaldehyde solution | 0.2 % | 0.2 % | 0.2% | 0.2 % |
| silicone oil emulsion | 0.8 % | 0.8% | 0.8 % | 0.8 % |
| water | 87 % | 79 % | 62 % | 38 % |

The finely ground active ingredient is intimately mixed with the adjuvants, giving a suspension concentrate from which suspensions of any desired concentration can be obtained by dilution with water.

It is often more practical for the active ingredients of the combinations according to the invention to be formulated separately and to be brought together in the desired mixing ratio in the applicator in the form of a "tank mixture" in water shortly before application. Alternatively, a pre-mix composition containing compounds (A) and (B) are formulated together.

Accordingly, the composition according to the third aspect includes formulations of any nature (e.g., emulsifiable concentrate, suspension concentrates, wettable powders) and can be prepared as a specific formulation of compounds (A) and (B) or prepared from the individual formulated compounds in a container, e.g., tank mixture.

The application of the compounds on the area where control is desired or the locus thereof can be achieved by applying the compounds (A) and (B) defined in the first aspect, generally after dilution, by, for example, spray or broadcast methods.

The time elapse between application of each compound to the area where control is desired should be such that both compounds are able to act synergistically on the undesired vegetation. The order of the compounds, in the event the application of the compounds is in succession, is not critical, although preferred is compound (A) followed by compound (B). The second compound is applied within preferably 2, more preferably 1, especially 0.5, days of the first compound.

In each aspect and embodiment of the invention, "consisting essentially" and inflections thereof are a preferred embodiment of "comprising" and its inflections, and "consisting of' and inflections thereof are a preferred embodiment of "consisting essentially of" and its inflections.

The pesticides having a common name are described either in the e-Pesticide Manual, version 3.0, 13th Edition, Ed. CDC Tomlin, British Crop Protection Council, 2003-04, along with their characteristics or the Compendium of Pesticide Comman Names at http://www.alanwood.net/pesticides/index cn frame.html.

## Claims

1. A method of controlling undesired vegetation in crops of useful plants which comprises applying a combination comprising (A) flumioxazin and (B) one or more of prosulfocarb, pinoxaden, pendimethalin, diflufenican, flupyrsulfuron, triasulfuron, mesosulfuron, flufenacet and pyroxsulam, either simultaneously or in succession in any order, to the locus where control is desired, for example, on the undesired vegetation or the locus thereof.

2. The method according to claim 1 wherein the combination comprises (i) flumioxazin and prosulfocarb; (ii) flumioxazin, prosulfocarb and pendimethalin; (iii) flumioxazin and diflufenican; (iv) flumioxazin and pendimethalin, (v) flumioxazin, prosulfocarb and diflufenican; (vi) flumioxazin and flupyrsulfuron; (vii) flumioxazin and mesosulfuron: (viii) flumioxazin and triasulfuron; (ix) flumioxazin and flufenacet; (x) flumioxazin and pyroxsulam; or (xi) flumioxazin and pinoxaden, wherein any one of (i) to (x) optionally further comprises pinoxaden.

3. The method according to either claim 1 or claim 2 wherein the combination further comprises one or more other herbicides and/or one or more safeners.

4. The method according to any one of claims 1 to 3 wherein the combination is applied (i) before emergence (pre-emergence) of the undesired vegetation, (ii) after emergence (post-emergence) of the undesired vegetation, or (iii) both (i) and (ii).

5. The method according to any one of claims 1 to 4 wherein the combination is applied simultaneously.

6. The method according to any one of claims 1 to 5 wherein the combination is applied in the form of a single composition.

7. The method according to any one of claims 1 to 6 wherein the crop is a cereal.

8. The method according to any one of claims 1 to 7 wherein the undesired vegetation is selected from Alopecurus species, Poa- species, Apera- species, Avena spp-, Lolium - species, Bromus-species, Echinochloa spp., Leptochloa spp. Digitaria spp., Phalaris spp., Setaria spp., Brachiaria spp., Ischeamum spp., Gallium spp., Lamium spp., Geranium spp., Solanum spp., Veronica spp., Viola spp., Alchemilla spp., Kochia spp., Stellaria spp., Polygonum spp., Matricaria spp., Chenocpodium ppp., Aethusa cynapum, Amaranthus spp., Galinsoga spp., Monochoria spp., Lindernia spp., Sinapis spp., Raphanus spp-, Papaver spp., Capsella spp., Anthemis spp., Rotala spp., Butomus spp., Limnocharis spp., Sphenoclea spp., Commelina spp., Ludwigia spp., Bidens pilosa, Elatine spp., Kickxia spp., Scirpus spp., Sagittaria spp., Cyperus spp., Eleocharis spp. and Fimbristylis spp..

9. The method according to any one of claims 1 to 8 wherein the undesired vegetation is an ACCase-resistant weed or an ALS-resistant weed.

10. A combination as defined in any of claims 1 to 3.

11. A composition comprising (A) flumioxazin and (B) one or more of prosulfocarb, pinoxaden, pendimethalin, diflufenican, flupyrsulfuron, mesosulfuron, triasulfuron, flufenacet and pyroxsulam, and optionally one or more customary formulation auxiliaries.

12. The composition according to claim 11 comprising (i) flumioxazin and prosulfocarb; (ii) flumioxazin, prosulfocarb and pendimethalin; (iii) flumioxazin and diflufenican; (iv) flumioxazin and pendimethalin, (v) flumioxazin, prosulfocarb and diflufenican; (vi) flumioxazin and flupyrsulfuron; (vii) flumioxazin and mesosulfuron; (viii) flumioxazin and triasulfuron; (ix) flumioxazin and flufenacet; (x) flumioxazin and pyroxsulam; or (xi) flumioxazin and pinoxaden, wherein any one of (i) to (x) optionally further comprises pinoxaden.

13. The composition according to either claim 11 or claim 12 further comprising one or more other herbicides and/or one or more safeners.

14. The composition according to any one of claims 11 to 13 in the form of a pre-mix composition.
